# EUROPEAN PATENT SPECIFICATION

(11) **EP 2 744 705 B1**
(45) Date of publication and mention of the grant of the patent: **01.02.2017**
(21) Application number: 12750968.5
(22) Date of filing: 16.08.2012
(51) Int. Cl.: B32B 5/24, B32B 3/12, B32B 7/12, B64C 1/06

(54) **HIGH-STRENGTH AIRCRAFT INTERIOR PANEL WITH EMBEDDED INSERT**
HOCHFESTE FLUGZEUGINNENRAUMTAFEL MIT EINGEBETTETER EINLAGE
PANNEAU INTÉRIEUR D'AÉRONEF À HAUTE RÉSISTANCE COMPORTANT UN INSERT INCORPORÉ

(30) Priority: 17.08.2011 US 201161524616 P
(43) Date of publication of application: 25.06.2014
(73) Proprietor: B/E Aerospace, Inc., Wellington, FL 33414 (US)
(72) Inventor: RUONAVAARA, Kevin, Snohomish, WA 98290 (US); HOHENSEE, Ryan, Camano Island, WA 98282 (US); GRIEVE, James, C., Arlington, WA 98223 (US)
(74) Representative: Algemeen Octrooi- en Merkenbureau B.V.
(86) International application number: PCT/US2012/051087
(87) International publication number: WO 2013/025877

(56) References cited:
- US-A- 3 305 996
- US-A- 4 076 877
- US-A- 4 981 735
- US-A1- 2011 183 104
- US-B1- 6 488 460

## Description

### TECHNICAL FIELD AND BACKGROUND OF THE INVENTION

This invention relates generally to the field of materials suitable for use in aircraft interior upfitting, and more particularly, to a high-strength sandwich panel including an embedded insert for supporting a high-weight load.

Conventional sandwich panels commonly used in the construction of aircraft interior walls and partitions preferably have a high strength and light weight. Such panels are typically constructed by adhesively bonding face sheets to opposite sides of a core material, for example, an aramid core. Sandwich panels may include additional internal layers to provide further strength and optimize the distribution of applied loads.

When mounting a high-weight load to a conventional sandwich panel, for example an attendant seat, it is critical that the panel be able to support the weight of the seat, the occupant and additional loading without damage or deformation to the panel. One conventional method of attaching a structure to a sandwich panel includes drilling holes in the panel and inserting fastener-receiving anchors. This method, although suitable for light loads, compromises the structural integrity of the panel and is incapable of adequately distributing high loads through the panel.

Accordingly, what is needed is a sandwich panel construction configured to distribute applied loads into the fiber-reinforcement plies of the panel, thus uniformly distributing applied loads to the sandwich panel field area.

### BRIEF SUMMARY OF THE INVENTION

US 4,076,877 A discloses a cell structure plate which includes a filler and an outer skin made of plastic, in line with the pre-amble of claim 1. US 2011/0183104 A1 discloses a sandwich panel with a honeycomb-shaped core structure, to form a floor surface in a fuselage airframe of an aircraft.

Various panel fasteners and inserts for use with panels are disclosed in US 3305996 A1, US 4981735 A and US 6488460 B1.

According to the invention, an aircraft interior sandwich panel including an embedded insert for providing a high-strength panel is provided herein.

The panel is configured to support a high-weight load,

The insert is configured to receive a fastener for attaching a load to the panel and to distribute high loads through the panel.

The insert is embedded within the panel beneath decorative facings of the panel.

These and other aspects are met by the present invention, which is defined in independent claim 1.

In one embodiment, the panel insert is tied to the core panel with at least one of potting compound, reinforcing fiberglass layers and aramid yarns circumferentially surrounding the stem.

In another embodiment, the aircraft interior panel includes circular, fiber-reinforced doubler plies arranged above and below outward of the core panel and parallel thereto and circumferentially surrounding the stem. The structural plies above and below the core panel can be sandwiched between the circular, fiber-reinforced doubler plies. The structural plies above and below the core panel can include a plurality of structural plies oriented at varying orientations to optimize distribution of the load through the aircraft interior panel. The plurality of structural plies and outwardly arranged doubler plies can be arranged at varying orientations at can have varying directional weaves, for example, 0°, 45° and 90°.

In another embodiment, depending on the configuration of the applied load, the aircraft interior panel can include a plurality of spaced panel inserts, each of the spaced panel inserts including doubler plies in the panel field area of the inserts.

According to the invention, the panel insert includes two halves parts that press together to engage a locking feature for preventing the parts from being pulled apart. The two parts of the panel insert include a female half and a male half that engages within the female half. The male and female halves, when engaged, sandwich the core panel, the structural plies and the doubler plies between the enlarged flanges.

In another embodiment, the panel insert defines an internally threaded axial bore for receiving an externally threaded fastener therein. The enlarged flanges can have a circular or plate shape.

In another embodiment, the aircraft interior panel can include adhesive film, such as adhesive film positioned between the outward surface of the enlarged flanges and the facing sheets for facilitating bonding therebetween.

In another embodiment, the core panel can be an aramid or honeycomb material.

Additional features, aspects and advantages of the invention will be set forth in the detailed description which follows, and in part will be readily apparent to those skilled in the art from that description or recognized by practicing the invention as described herein. It is to be understood that both the foregoing general description and the following detailed description present various embodiments of the invention, and are intended to provide an overview or framework for understanding the nature and character of the invention as it is claimed. The accompanying drawings are included to provide a further understanding of the invention, and are incorporated in and constitute a part of this specification.

### BRIEF DESCRIPTION OF THE DRAWINGS

Features, aspects and advantages of the invention are understood when the following detailed description of the invention is read with reference to the accompanying drawings, in which:
FIG. 1 is a schematic diagram of a high-strength panel including an embedded insert according to an embodiment of the invention;
FIG. 2 is a sectional view through the thickness of the panel of FIG. 1;
FIG. 3A shows one side of a panel insert;
FIG. 3B shows the opposing side of the insert of FIG. 3A;
FIG. 3C is a sectional view through the insert of FIGS. 3A and 3B;
FIG. 4 shows the female part of another embodiment of a panel insert; and
FIG. 5 shows the male part for matingly engaging with the female part of FIG. 4.

### DETAILED DESCRIPTION OF THE INVENTION

The present invention will now be described more fully hereinafter with reference to the accompanying drawings in which exemplary embodiments of the invention are shown. However, the invention may be embodied in many different forms and should not be construed as limited to the representative embodiments set forth herein. The exemplary embodiments are provided so that this disclosure will be both thorough and complete, and will fully convey the scope of the invention and enable one of ordinary skill in the art to make, use and practice the invention.

Referring to the figures, a high-strength panel for use in an aircraft interior or other application is shown generally at reference numeral 10. The aircraft interior panel 10 is configured for use in interior walls and panels to which a high-weight load is attached, for example an attendant seat. The aircraft interior panel 10 provided herein includes an embedded panel insert 12 and multi-ply or multi-layered constructed configured to optimally react to an applied load and distribute the applied load into the adjacent fiber-reinforcement plies of the aircraft interior panel 10. The panel insert 12 is concealed from view beneath facing sheets 14, such as decorative facing plies, of the aircraft interior panel 10 for aesthetic reasons, among other reasons. A single aircraft interior panel 10 can include a plurality of spaced panel inserts 12 for attaching multiple loads to the panel or aligning with multiple attachment points of a high-weight load, for example an attachment bracket of an attendant seat.

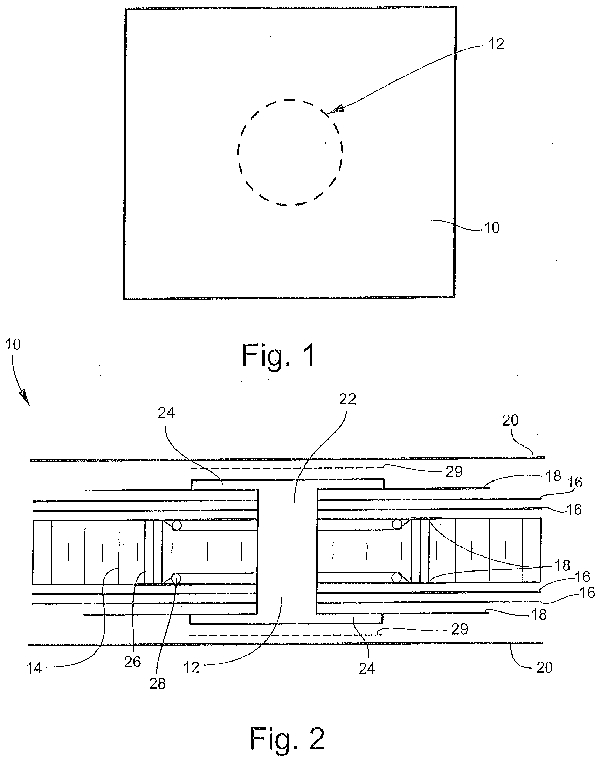

Referring to Fig. 1, a portion of a major face of an aircraft interior panel 10 is shown with the embedded panel insert 12 shown in broken lines to indicate its position beneath the facing sheet of the aircraft interior panel 10.

Referring to FIG. 2, a sectional view through the aircraft interior panel 10 and panel insert 12 of FIG. 1 illustrates the multi-layered arrangement of the aircraft interior panel 10 and embedding of the panel insert 12 therein. The aircraft interior panel 10 includes a core panel 14 sandwiched between a plurality of structural plies 16. The core panel 14 comprises a substantial portion of the thickness of the aircraft interior panel 10 and can be an aramid core panel, honeycomb panel or like panel that is preferably lightweight and fire retardant. The structural plies 16, or structural layers, are arranged above and below the core panel 14 and are parallel to the core panel 14 and run coextensive with the core panel 14.

The structural plies 16 can include any number of plies above and below the core panel 14 and are preferably oriented at varying orientations to optimize distribution of the load through the aircraft interior panel. The structural plies 16 can have varying orientations and directional weaves, for example 0°, 45° and 90°. The structural plies 16 above and below the core panel 14 are sandwiched between doubler plies 18 that can be oriented at varying orientations and can have different diameters. As used herein, the terms "doubler ply" and "doubler plies" can refer to a ply including fibers dispersed within a resin body.

The panel field area includes doubler plies 18 located in the area of each panel insert 12, while the structural plies 16 may extend throughout the entirety of the panel field area. The aircraft interior panel 10 is faced with facing plies 20 as the outermost layer that conceals the embedded panel insert 12.

The panel insert 12 is configured for receiving a fastener for attaching a load to the aircraft interior panel 10. The panel insert 12 generally includes an elongate, cylindrical stem 22, capped at each end in an enlarged flange 24. As shown, the enlarged flanges 24 are circular or disk-shaped, although the enlarged flanges can have any shape. The cylindrical stem 22 of the panel insert 12 passes through and interrupts the core panel 14, structural plies 16 and doubler plies 18. The enlarged flanges 24 having an outer diameter greater than that of the stem 22 and sandwich the doubler plies 18, structural plies 16 and core panel 14 therebetween.

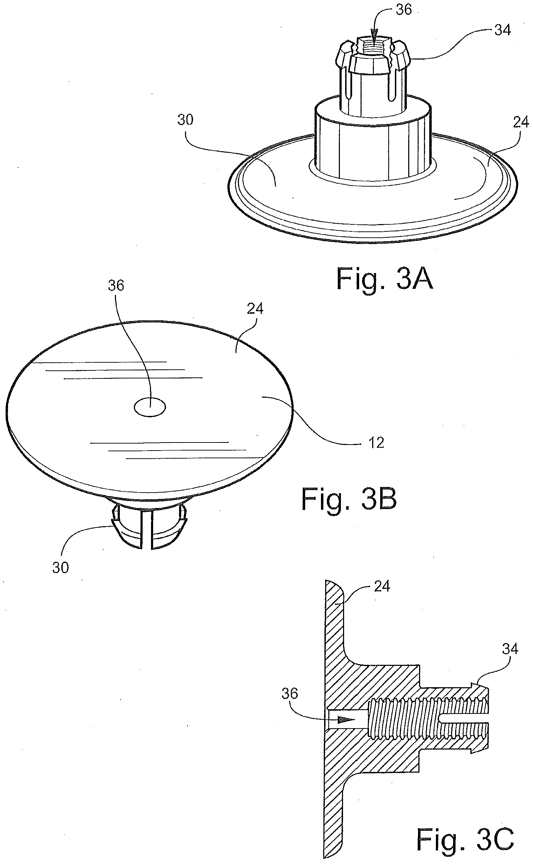

The panel insert 12 can have a two-part construction in which the parts are brought together through the plies and the core panel 14 and press together to engage a locking feature to prevent the two parts from being pulled apart. Referring to FIGS. 3A-5, which are described below in further detail, the two parts may include a female part and a male part that engages within the female part to lock the two parts together and sandwich the plies and core panel 14 therebetween.

The panel insert 12 is arranged within the aircraft interior panel 10 with the stem 22 arranged axially perpendicular to the core panel 14 and the enlarged flanges being arranged parallel to the core panel 14. At least one of the inside and outside edges of the enlarged flanges 24 can be sanded or chamfered to a smooth radius to resist tearing through the plies 16, 18 or facing sheets 20.

The panel insert 12 is tied to the core panel 14 with at least one of potting compound 26, the reinforcing fiberglass layers and aramid yarns 28 circumferentially surrounding the stem 22 to maintain the structural integrity of the aircraft interior panel 10. Adhesive film 29 can be applied to the outward surface of the enlarged flanges 24 to promote bonding between the enlarged flanges 24 and the facing sheets 20. Adhesive film may be used within the aircraft interior panel 10 in other arrangements to promote bonding between any of the core panel 14, structural plies 16, doubler plies 18, facing sheets 20 and panel insert 12.

Referring to FIGS 3A-4, the panel insert 12 is a two-part insert including a male half 30 and a female half 32. The male half 30 and the female half 32 are pressed together to lockingly engage to prevent being pulled apart. The male half 30 includes inwardly radially compressible tabs 34 terminating in protrusions that catch when slid over complimentary catches within the bore defined by the female half 32 of the panel insert 12. As shown in the combination of FIGS. 3A and 3B, the male half 30 defines an internally threaded axial bore 36 that opens through the outward face of the enlarged flange 24 for receiving an externally threaded fastener therein, for example a screw for attaching a load to the aircraft interior panel 10. The fastener may turn to advance through the male half 30 into the female half 32 to further lock the male and female halves 30, 32 together. As shown in FIG. 3C, the internal threading may extend only a portion of the length of the bore 36.

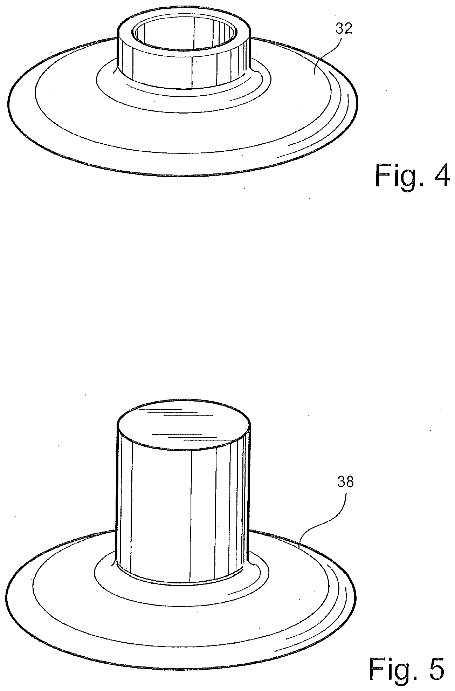

Referring to FIG. 5, another embodiment of a male half for engaging within the female half 32 of FIG. 34 is shown at reference numeral 38. The bore (not shown) of male half 38 may not extend the full length of its stem. Regardless of the panel insert configuration, the stem can have any length or diameter, and preferably has a lesser diameter than the outer diameter of the enlarged flanges 24.

While a high-strength aircraft interior panel has been described with reference to specific embodiments and examples, it is intended that various details of the invention may be changed without departing from the scope of the invention. Furthermore, the foregoing description of the preferred embodiments of the invention and best mode for practicing the invention are provided for the purpose of illustration only and not for the purpose of limitation.

## Claims

1. An aircraft interior panel (10), comprising:
a core panel (14) sandwiched
between structural plies (16), wherein the structural plies (16) are sandwiched between doubler plies (18) ;
a panel insert (12) embedded within the aircraft interior panel (10) and configured for receiving a fastener for attaching a load to the aircraft interior panel (10), the panel insert (12) passing through and interrupting the core panel
(14), wherein the panel insert (12) includes an elongate stem (22); and
facing sheets (20) bonded outward of the panel insert (12) for concealing the panel insert (12) within the aircraft interior panel (10),
wherein the elongated stem (22) is capped on each end with an enlarged flange (24), the elongate stem (22) being arranged axially perpendicular to the core panel (14) and the enlarged flanges (24) being arranged parallel to the core panel (14), the panel insert (12) including male and female halves (30, 32) that press together to engage a locking feature preventing the two halves from being pulled apart, and the male and female halves (30, 32), when
engaged, sandwiching the core panel (14), the structural plies (16) and the doubler plies (18) between the enlarged flanges (24).

2. The aircraft interior panel (10) according to claim 1, wherein the panel insert (12) is tied to the core panel (14) with at least one of potting compound (26), reinforcing fiberglass layers and aramid yarns (28) circumferentially surrounding the stem (22).

3. The aircraft interior panel (10) according to claim 1, wherein the doubler plies (18) include at least one circular, fiber-reinforced doubler ply (18) arranged outward of the core panel (14) and parallel thereto and circumferentially surrounding the stem (22).

4. The aircraft interior panel (10) according to claim 3, wherein
the doubler plies (18) include circular, fiber-reinforced doubler plies arranged above and below outward of the core panel, parallel thereto and circumferentially surrounding the stem, and wherein the structural plies (16) above and below the core panel (14) are sandwiched between the circular, fiber-reinforced doubler plies (18).

5. The aircraft interior panel (10) according to claim 1, wherein the structural plies (16) above and below the core panel (14) include a plurality of structural plies oriented at varying orientations to optimize distribution of the load through the aircraft interior panel (10).

6. The aircraft interior panel (10) according to claim 5, wherein the plurality of structural plies (16) and the plurality of doubler plies (18) are arranged at varying orientations with respect to adjacent ones of each other.

7. The aircraft interior panel (10) according to claim 1, further comprising a plurality of spaced panel inserts (12), each of the plurality of spaced panel inserts (12) including doubler plies (18) in the panel field area of the panel inserts (12).

8. The aircraft interior panel (10) according to claim 1, wherein the panel insert (12) defines internally threaded axial bore (36) for receiving an externally threaded fastener therein.

9. The aircraft interior panel (10) according to claim 1, wherein the enlarged flanges (24) are circular.

10. The aircraft interior panel (10) according to claim 1, further comprising adhesive film (29) applied to the outward surface of the enlarged flanges (24) for adhesively bonding the facing sheets (20) to the enlarged flanges (24).

11. The aircraft interior panel (10) according to claim 1, wherein the core panel (14) is an aramid or honeycomb material.

## Patentansprüche

1. Flugzeuginnenraumtafel (10), umfassend:
eine zwischen Strukturlagen (16) eingelegte Kerntafel (14), wobei die Strukturlagen (16) zwischen Verdopplerlagen (18) eingelegt sind;
einen Tafeleinsatz (12), der in der Flugzeuginnenraumtafel (10) eingebettet ist und zur Aufnahme einer Befestigungsvorrichtung zur Befestigung einer Last an der Flugzeuginnenraumtafel (10) gestaltet ist, wobei der Tafeleinsatz (12) durch die Kerntafel (14) hindurchgeht und diese unterbricht, wobei der Tafeleinsatz (12) einen länglichen Schaft (22) aufweist; und
Verkleidungsplatten (20), die außerhalb des Tafeleinsatzes (12) verklebt sind, um den Tafeleinsatz (12) in der Flugzeuginnenraumtafel (10) zu verbergen,
wobei der längliche Schaft (22) an jedem Ende mit einem vergrößerten Flansch (24) abgedeckt ist, wobei der längliche Schaft (22) axial senkrecht zur Kerntafel (14) angeordnet ist und die vergrößerten Flansche (24) parallel zu der Kerntafel (14) angeordnet sind, wobei der Tafeleinsatz (12) eine Einsteck- und eine Aufnahmehälfte (30, 32) aufweist, die beim Zusammendrücken eine Verriegelung in Eingriff bringen, die das Auseinanderziehen der beiden Hälften verhindert, und wobei die Einsteck- und die Aufnahmehälfte (30, 32), wenn sie sich in Eingriff befinden, die Kerntafel (14), die Strukturlagen (16) und die Verdopplerlagen (18) zwischen den vergrößerten Flanschen (24) einschließen.

2. Flugzeuginnenraumtafel (10) nach Anspruch 1, wobei der Tafeleinsatz (12) mit der Kerntafel (14) mit einer Vergussmasse (26) und/oder verstärkenden Glasfaserschichten und/oder Aramidfasern (28), die den Schaft (22) am Umfang umgibt/umgeben, verbunden ist.

3. Flugzeuginnenraumtafel (10) nach Anspruch 1, wobei die Verdopplerlagen (18) wenigstens eine kreisförmige, faserverstärkte Verdopplerlage (18) aufweisen, die außerhalb der Kerntafel (14) parallel zu dieser angeordnet ist und den Schaft (22) am Umfang umgibt.

4. Flugzeuginnenraumtafel (10) nach Anspruch 3, wobei die Verdopplerlagen (18) kreisförmige, faserverstärkte Verdopplerlagen aufweisen, die oberhalb und unterhalb außerhalb der Kerntafel parallel zu dieser angeordnet sind und den Schaft am Umfang umgeben, und wobei die Strukturlagen (16) oberhalb und unterhalb der Kerntafel (14) zwischen den kreisförmigen, faserverstärkten Verdopplerlagen (18) eingelegt sind.

5. Flugzeuginnenraumtafel (10) nach Anspruch 1, wobei die Strukturlagen (16) oberhalb und unterhalb der Kerntafel (14) mehrere Strukturlagen mit unterschiedlichen Ausrichtungen aufweisen, um die Lastverteilung über die Flugzeuginnenraumtafel (10) zu optimieren.

6. Flugzeuginnenraumtafel (10) nach Anspruch 5, wobei die mehreren Strukturlagen (16) und die mehreren Verdopplerlagen (18) in Bezug auf die jeweils benachbarten mit unterschiedlichen Ausrichtungen angeordnet sind.

7. Flugzeuginnenraumtafel (10) nach Anspruch 1, die ferner mehrere voneinander beabstandete Tafeleinsätze (12) umfasst, wobei jeder der mehreren voneinander beabstandeten Tafeleinsätze (12) im Tafelfeldbereich der Tafeleinsätze (12) Verdopplerlagen (18) aufweist.

8. Flugzeuginnenraumtafel (10) nach Anspruch 1, wobei der Tafeleinsatz (12) eine mit einem Innengewinde versehene axiale Bohrung (36) zur Aufnahme einer mit einem Außengewinde versehenen Befestigungsvorrichtung begrenzt.

9. Flugzeuginnenraumtafel (10) nach Anspruch 1, wobei die vergrößerten Flansche (24) kreisförmig sind.

10. Flugzeuginnenraumtafel (10) nach Anspruch 1, die ferner einen Klebstofffilm (29) umfasst, der auf der Außenfläche der vergrößerten Flansche (24) zur adhäsiven Verbindung der Verkleidungsplatten (20) mit den vergrößerten Flanschen (24) aufgebracht ist.

11. Flugzeuginnenraumtafel (10) nach Anspruch 1, wobei es sich bei der Kerntafel (14) um ein Aramid- oder Wabenmaterial handelt.

## Revendications

1. Panneau intérieur d'aéronef (10), comprenant :
un panneau de coeur (14) pris en sandwich entre des plis structuraux (16), dans lequel les plis structuraux (16) sont pris en sandwich entre des plis de renfort (18) ;
un insert de panneau (12) incorporé dans le panneau intérieur d'aéronef (10) et configuré pour recevoir une attache pour attacher une charge au panneau intérieur d'aéronef (10), l'insert de panneau (12) traversant et interrompant le panneau de coeur (14), dans lequel l'insert de panneau (12) comporte une tige allongée (22) ; et
des feuilles de revêtement (20) liées vers l'extérieur de l'insert de panneau (12) pour cacher l'insert de panneau (12) à l'intérieur du panneau intérieur d'aéronef (10),
dans lequel la tige allongée (22) est coiffée sur chaque extrémité d'une bride élargie (24), la tige allongée (22) étant agencée axialement perpendiculaire au panneau de coeur (14) et les brides élargies (24) étant agencées parallèlement au panneau de coeur (14), l'insert de panneau (12) comportant des moitiés mâle et femelle (30, 32) qui pressent ensemble pour engager un dispositif de verrouillage empêchant les deux moitiés de s'écarter, et les moitiés mâle et femelle (30, 32) lorsqu'elles sont engagées, prennent en sandwich le panneau de coeur (14), les plis structuraux (16) et les plis de renfort (18) entre les brides élargies (24).

2. Panneau intérieur d'aéronef (10) selon la revendication 1, dans lequel l'insert de panneau (12) est lié au panneau de coeur (14) avec au moins l'un des composés d'enrobage (26), des couches de renforcement en fibre de verre et des fils d'aramide (28) entourant la tige (22) de manière circonférentielle.

3. Panneau intérieur d'aéronef (10) selon la revendication 1, dans lequel les plis de renfort (18) comportent au moins un pli de renfort (18) circulaire, renforcé par des fibres, agencé vers l'extérieur du panneau de coeur (14) et parallèle à celui-ci et entourant la tige (22) de manière circonférentielle.

4. Panneau intérieur d'aéronef (10) selon la revendication 3, dans lequel les plis de renfort (18) comportent des plis de renfort circulaires, renforcés par des fibres, agencés au-dessus et en dessous vers l'extérieur du panneau de coeur, parallèles à celui-ci et entourant la tige (22) de manière circonférentielle, et dans lequel les plis structuraux (16) au-dessus et en dessous du panneau de coeur (14) sont pris en sandwich entre les plis de renfort (18) circulaires renforcés par des fibres.

5. Panneau intérieur d'aéronef (10) selon la revendication 1, dans lequel les plis structuraux (16) au-dessus et en dessous du panneau de coeur (14) comportent une pluralité de plis structuraux orientés selon des orientations variables pour optimiser la répartition de la charge à travers le panneau intérieur d'aéronef (10).

6. Panneau intérieur d'aéronef (10) selon la revendication 5, dans lequel la pluralité de plis structuraux (16) et la pluralité de plis de renfort (18) sont agencés selon des orientations variables par rapport à celles adjacentes les unes des autres.

7. Panneau intérieur d'aéronef (10) selon la revendication 1, comprenant en outre une pluralité d'inserts de panneaux espacés (12), chacun de la pluralité d'inserts de panneaux (12) espacés comportant des plis de renfort (18) dans la zone du champ de panneau des inserts de panneaux (12).

8. Panneau intérieur d'aéronef (10) selon la revendication 1, dans lequel l'insert de panneau (12) définit un alésage axial à filetage intérieur (36) pour recevoir une attache à filetage extérieur dans celui-ci.

9. Panneau intérieur d'aéronef (10) selon la revendication 1, dans lequel les brides élargies (24) sont circulaires.

10. Panneau intérieur d'aéronef (10) selon la revendication 1, comprenant en outre un film adhésif (29) appliqué sur la surface extérieure des brides élargies (24) pour lier de manière adhésive les feuilles de revêtement (20) aux brides élargies (24).

11. Panneau intérieur d'aéronef (10) selon la revendication 1, dans lequel le panneau de coeur (14) est un matériau en aramide ou en nid d'abeille.
